# EUROPEAN PATENT SPECIFICATION

(11) **EP 1 916 456 B1**
(45) Date of publication and mention of the grant of the patent: **21.11.2012**
(21) Application number: 07254233.5
(22) Date of filing: 25.10.2007
(51) Int. Cl.: F16H 61/662

(54) **Straddle-type vehicle**
Grätschsitz-Fahrzeug
Véhicule de type chariot

(30) Priority: 27.10.2006 JP 2006293064; 19.09.2007 JP 2007243035
(43) Date of publication of application: 30.04.2008
(73) Proprietor: Yamaha Hatsudoki Kabushiki Kaisha, Iwata-shi, Shizuoka 438-8501 (JP)
(72) Inventor: Unno , Toshio c/o Yamaha Hatsudoki Kabushiki Kaisha, Shizuoka-ken 438-8501 (JP); Asaoka, Ryousuke c/o Yamaha Hatsudoki Kabushiki Kaisha, Shizuoka-ken 438-8501 (JP); Aoki, Hiroyuki c/o Yamaha Hatsudoki Kabushiki Kaisha, Shizuoka-ken 438-8501 (JP)
(74) Representative: Moreland, David

(56) References cited:
- EP-A2- 0 890 764
- WO-A1-2006/006506
- US-B1- 6 671 602

## Description

### FIELD OF THE INVENTION

The present invention relates to straddle-type vehicles (for example, motorcycles), and more particularly, relates to a straddle-type vehicle equipped with a continuously variable transmission. The present invention also relates to a continuously variable transmission.

### BACKGROUND OF THE INVENTION

Straddle-type vehicles such as scooter-type motorcycles widely use a V-belt continuously variable transmission. The V-belt continuously variable transmission includes a pair of primary and secondary sheaves with variable groove widths, the primary sheave being disposed on a primary shaft to which the output of a power source such as an engine is input and the secondary sheave being disposed on a secondary shaft which takes out the output to the driving wheel. A V-belt is wound around both sheaves, and the winding diameters of the V-belt around the sheaves are adjusted by changing the groove widths of each of the sheaves by a groove-width adjusting mechanism, so that the speed change ratio between both sheaves is controlled in a stepless manner.

The primary sheave and the secondary sheave are generally each composed of a fixed flange and a moving flange between which a V-groove is formed. Each moving flange is movable along the axis of the primary shaft or the secondary shaft. The moving flange is moved by a groove-width adjusting mechanism so that the speed change ratio can be controlled in a stepless manner.

Some conventional V-belt continuously variable transmissions of this type move the moving flange of the primary sheave to adjust the groove width by an electric motor. This structure allows the groove width to be adjusted freely, since the moving flange can be moved either in the direction to decrease the groove width of the primary sheave (to Top or High) or in the direction to increase the groove width (to Low) by the moving thrust of the electric motor (for example, refer to Japanese Patent No. 3,043,061).

Another conventional arrangement is described in Japanese Patent No. 2,950,957

Scooter-type motorcycles equipped with a mechanism to electronically control a V-belt type continuously variable transmission change the speed change ratio automatically according to a program (map), input in advance, for vehicle speed and engine speed (accelerator position) without the need for rider intervention. This facilitates vehicle operation and thus automatic continuously variable transmissions are widely used in various types of vehicle.

Some motorcycles equipped with this type of automatic continuously variable transmission have a plurality of drive modes with different speed-change characteristics using a plurality of the above-mentioned programs (maps). For example, JP-A-7-119804 discloses a vehicle having programs (maps) for specifying a plurality of drive modes: a normal mode map for normal driving, a sports mode for frisky and agile driving and an engine braking mode for downhill runs. The vehicle disclosed allows the plurality of maps for specifying drive modes to be selected automatically according to determination on the driving state of the vehicle (accelerator position, whether under braking or not), enabling the rider to drive in an appropriate manner according to the driving state without any switching operation.

However, the structure of JP-A-7-119804 has the problem that the rider cannot switch among the maps for specifying the respective drive modes according to the rider's intention because the maps are selected automatically; for example, the rider cannot accelerate freely even if the rider wants to increase speed sharply during passing or climbing a hill, or the rider cannot apply engine braking freely even if the rider wants to decrease speed before entering a curve.

The generic WO2006/006506 describes a controller for a continuously variable transmission in which controller is shifted down from a normal (automatic) mode to a kick-down mode by shifting a speed change ratio to a lower side than a speed change ratio in the normal mode. The shift down is performed responsive to the operation of a kick-down operating part that is provided separately from the accelerator. When the controller detects a state of the straddle-type vehicle other than the kick-down operating part, the control issues a kick-down release command according to the detected state. If the kick-down operating part is pressed twice, the amount of kick-down is increased upon the first pressing and further increased by the second pressing.

US6671602 describes a continuously variable transmission that is operable in a first mode which is an automatic operational mode and a second mode, which is a manual operation mode in which the driver may directly intervene in the choice of ratio.

It is an object of an embodiment of the invention to provide a straddle-type vehicle that can be accelerated or decelerated by a simple operation irrespective of selected drive mode.

### SUMMARY OF THE INVENTION

Various aspects of the present invention are defined in the independent claims. Some preferred features are defined in the dependent claims.

A straddle-type vehicle described herein includes a control unit for controlling a continuously variable transmission. The straddle-type vehicle includes a shift-down operation member. The control unit has a plurality of drive modes. The control unit executes a first control function of switching among the plurality of drive modes and second control function of shifting, in at least two of the plurality of drive modes, to a shift-down state in which the speed change ratio is lower than that of each drive mode, which execution may be according to the shift-down operation member.

In a straddle-type vehicle equipped with a control unit that electrically controls the speed change gear of a continuously variable transmission, a plurality of drive modes can be switched. Furthermore, the change gear in at least two of the drive modes can be shifted to a shift-down state in which the speed change ratio is lower than that of each drive mode according to the operation of a shift-down operation member. This arrangement allows temporary acceleration /deceleration by shift-down control while selecting the optimum drive mode according to driving state, thereby improving rider comfort.

Also described herein are vehicles or transmissions in which the change gear can be shifted to a shift-down state from only a single drive mode by operation of a shift-down control.

### BRIEF DESCRIPTION OF THE DRAWINGS

Fig. 1 is a side view of a straddle-type vehicle 100 according to an embodiment of the invention.
Fig. 2 is a block diagram for describing a control unit 10 mounted to the straddle-type vehicle 100 of the embodiment and the peripheral configuration thereof.
Fig. 3 is a diagram for describing the control of the control unit of the straddle-type vehicle 100.
Fig. 4 (a) is a diagram for describing a control map R(A) for a normal mode A; and Fig. 4 (b) is a diagram for describing a control map R(B) for an assist I mode B.
Fig. 5 is a diagram for describing the control of the control unit of a straddle-type vehicle 200.
Fig. 6 is a diagram for describing a control map R(C) for an assist II mode C.
Fig. 7 is a block diagram showing the arrangement of the continuously variable transmission of the embodiment.
Fig. 8 is a block diagram for describing a control unit according to another embodiment and the peripheral configuration thereof.
Fig. 9 is a block diagram showing the arrangement of a continuously variable transmission according to this embodiment.
Fig. 10 is a block diagram showing the arrangement of a continuously variable transmission according to another embodiment.

Embodiments of the invention will be described hereinbelow with reference to the drawings, wherein like and corresponding parts in each of the several drawings are identified by the same reference character. It is to be understood that the invention is not limited to the following embodiments.

### DETAILED DESCRIPTION OF THE DRAWINGS

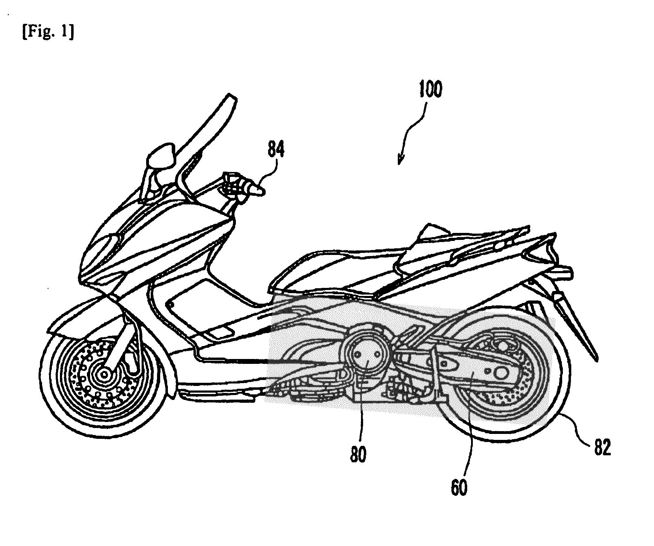

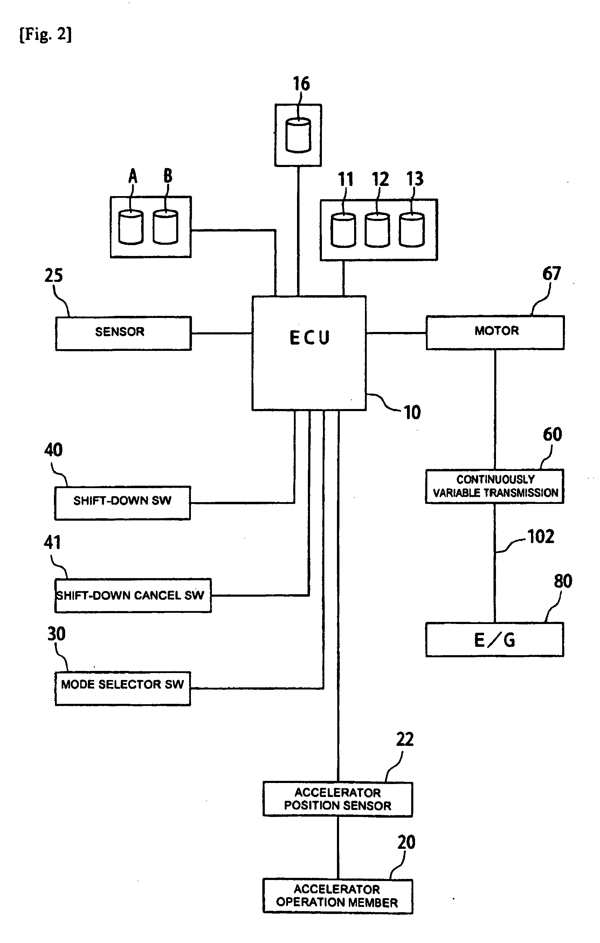

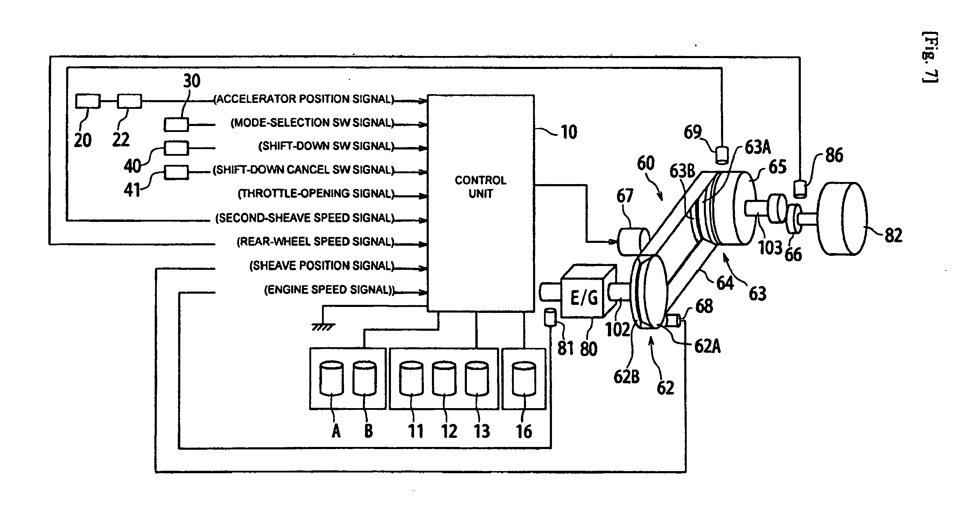

Fig. 1 is a side view of a straddle-type vehicle 100 according to an embodiment of the invention. Figs. 2 and 7 are block diagrams for describing a control unit 10 mounted to the straddle-type vehicle 100 of this embodiment and the peripheral configuration thereof.

As shown in Figs. 2 and 7, the straddle-type vehicle 100 of this embodiment includes a primary drive (engine) 80 whose output is controlled by an accelerator operation member 20 operated by a rider, a continuously variable transmission 60 connected to the engine 80, and a control unit 10 that controls the continuously variable transmission 60 electronically. The straddle-type vehicle 100 further includes a shift-down operation member 40. The control unit 10 has a plurality of drive modes A and B. The control unit 10 executes first control 11 of switching between the drive modes A and B. The control unit 10 further executes second control 12 of shifting the speed change ratio of the drive modes A and B to Low according to the operation of the shift-down operation member 40 in at least two of the drive modes A and B. The control unit 10 executes various controls according to a predetermined program.

The straddle-type vehicle 100 will be described hereinbelow. The straddle-type vehicle 100 shown in Fig. 1 is a scooter-type motorcycle. The driving force generated by the engine 80 is transmitted to a rear wheel (driving wheel) 82 via the continuously variable transmission 60. In the case of the straddle-type vehicle 100, the accelerator operation member 20 operated by the rider is an accelerator or an accelerator twist grip mounted to a handle bar 84.

The continuously variable transmission 60 of this embodiment is an electronically controlled V-belt type automatic continuously variable transmission. As shown in Fig. 2, the position of the moving sheave (not shown) of the primary sheave of the V-belt type continuously variable transmission 60 is controlled by a sheave-position moving device (in this embodiment, an electric motor) 67. The primary sheave whose position is controlled by the electric motor 67 is connected to a primary shaft 102 (for example, a crankshaft) rotated by the engine 80.

The continuously variable transmission 60 can be operated in a plurality of switchable drive modes. Here, the "drive modes" mean speed change modes during driving vehicles, for example. This embodiment employs a plurality of gear change modes with different speed change characteristics for the continuously variable transmission 60. Specifically, the continuously variable transmission 60 operates in two modes, a normal mode A (a so-called economic mode) in which economy is given a high priority in consideration of low fuel consumption and low noise and an assist I mode B (a so-called power mode) in which the output performance of the engine or the like is given a high priority. The drive modes can be switched manually according to the operation based on the intention of the rider of the straddle-type vehicle 100.

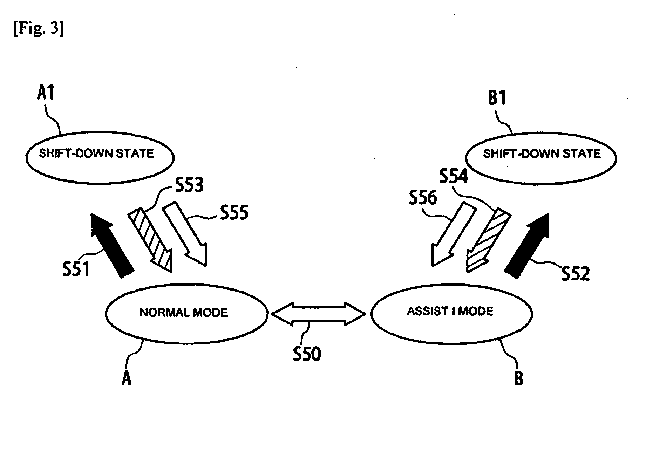

Referring also to Fig. 3, a method of control by the control unit 10 of the embodiment will be described.

The control unit 10 executes the first control 11 of switching the plurality of drive modes A and B. In this embodiment, the control unit 10 can execute the control in such a manner as to switch the drive modes according to the operation of a mode-selection operation member 30 by the rider, provided separately from the accelerator operation member 20. In the example shown in Figs. 2 and 3, the drive mode is switched between the normal mode A and the assist I mode B by the control unit 10 (arrow S50).

In this embodiment, the control unit 10 is electrically connected to a mode selector switch (mode selector SW) 30 as the mode-selection operation member 30. The switching among the drive modes can be executed when the rider turns on the mode selector switch 30. The mode selector switch 30 is a mode switching button, for example.

The control unit 10 executes the second control 12 of shifting the speed change ratio of at least two of the drive modes A and B to Low according to the operation of the shift-down operation member 40. In this embodiment, the second control 12 can be executed in all the drive modes A and B set for the control unit 10. Specifically, the control unit 10 can execute control, in each of the two drive modes (the normal mode A and the assist I mode B), to shift the transmission to a shift-down state in which the speed change ratio is lower than that of each drive mode by rider operation of a shift-down operation member 40 provided separately from the accelerator operation member 20. That is, when the drive mode is shifted from the normal mode A to a shift-down state A1 (arrow S51), the control unit 10 can shift the speed change ratio to Low from that of the normal mode A, and when the drive mode is shifted from the assist I mode B to a shift-down state B1 (arrow S52), the control unit 10 can shift the speed change ratio from that of the assist I mode B to Low.

In this embodiment, the control unit 10 is electrically connected to a shift-down switch (a shift-down SW) 40 serving as a trigger for shifting to a shift-down state, as the shift down operation member 40. The shift down operation can be executed by the rider's turning on the shift-down switch 40. The shift-down switch 40 is a shift-down button (SD button), for example.

According to the embodiment of the invention, in the straddle-type vehicle 100 equipped with the control unit 10 which electrically controls the gear change of the continuously variable transmission 60, the control unit 10 executes control to switch between two drive modes, the normal mode A and the assist I mode B, and in each drive mode A or B, to shift the speed change ratio to Low (to A1 or B1) from each speed change ratio. According to the invention, the rider can accelerate temporarily from either drive mode by shift-down control while selecting the optimum drive mode from the two drive modes A and B according to driving conditions. This improves the riding comfort. Moreover, the shift-down control allows temporary speed reduction (that is, speed reduction by engine braking).

With the above arrangement, for example, even in the normal mode A (a mode in which the output performance of the engine or the like is reduced), the rider can accelerate quickly merely by a simple switching operation. This eliminates the need for switching to the assist I mode B (a mode in which the output performance of the engine or the like is given a high priority) during passing or climbing a hill, allowing the rider to enjoy comfortable driving.

Since the switching of the drive modes is executed by rider's switching operation, the rider can select the optimum drive mode freely. Moreover, since the shift to shift-down state is also executed by rider's switching operation, an appropriate acceleration/deceleration effect according to rider's intention can be obtained.

While the mode selector switch 30 and the shift-down operation member 40 of this embodiment are separate switches, the mode-selection operation member 30 may double as the shift-down operation member 40. For example, one button may be used as both the mode-selection operation member and the shift-down operation member, wherein the switching of the drive modes is executed by pressing and holding the button, and the shift to shift-down state is executed by tapping the button.

In this embodiment, the switching between the normal mode A and the assist I mode B is executed manually by the rider (by switching operation). The invention is not limited to that; the drive modes may be switched automatically. For example, a straddle-type vehicle having an automatic drive mode in which the drive modes are switched in accordance with the driving state of the vehicle may be used. The automatic drive mode selection also allows shift to a shift-down state from the respective drive modes. Therefore, temporary acceleration/deceleration by shift-down control can be achieved, with the respective drive modes held.

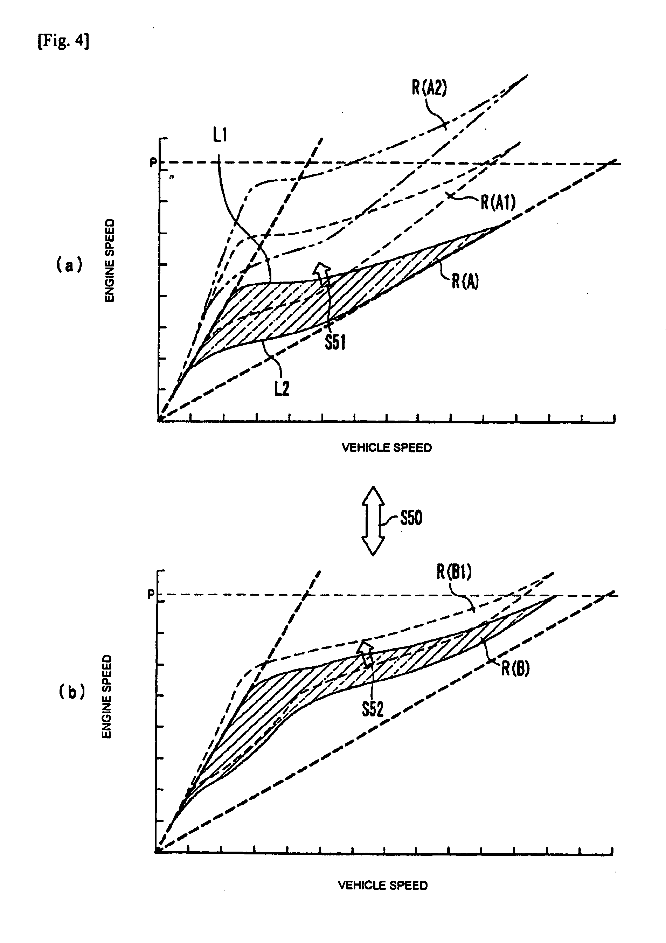

Referring to Figs. 4 (a) and 4 (b), the arrangement of the embodiment of the invention and, in particular, the control of the control unit of the continuously variable transmission will be described in detail.

The control unit 10 of this embodiment is an electronic control unit (ECU). For example, the electronic control unit (ECU) includes a microprocessor unit (MPU). The control unit 10 calculates a speed change ratio according to the driving state of the vehicle (vehicle speed and throttle opening) from a registered control map (program), and sends a gear change instruction for achieving the speed change ratio to the continuously variable transmission 60, thereby achieving the desired speed change ratio.

Practically, the control unit 10 calculates a target value of the speed change ratio (target speed change ratio) from the control map on the basis of the information on the vehicle speed and the throttle opening and drives the electric motor 67 so as to achieve the target speed change ratio, thereby controlling the position of the moving sheave of the primary sheave. The control map is stored in a storage section disposed in the control unit 10. Alternatively, a storage unit which is electrically connected to the control unit 10 may be provided outside the control unit 10, in which the control map may be stored.

Examples of the control map of this embodiment are shown in Figs. 4(a) and 4(b). Fig. 4(a) shows a control map R(A) set for the control unit 10 in the normal mode A. Fig. 4(b) shows a control map R(B) set for the control unit 10 in the assist I mode B. The graphs plot the relationship between vehicle speed and engine speed in the respective drive modes. Fig. 4 shows, with the same vehicle speed, the higher the engine speed, the lower the speed change ratio of the continuously variable transmission is set. The control maps (R (A) and R (B)) in the respective drive modes indicate the regions (control regions) specified by the respective control maps. The control regions are surrounded by line L1 indicative of the relationship between vehicle speed and target engine speed when the throttle is completely closed and line L2 indicative of the relationship between vehicle speed and target engine speed when the throttle is fully open.

In the example of the normal mode shown in Fig. 4(a), on execution of control for the normal mode, a target engine speed is calculated from the information on the vehicle speed and the throttle opening. Specifically, a position on the horizontal axis in Fig. 4 (a) is determined from the information on the vehicle speed. Then, a target engine speed is determined within the range of the control map R(A) according to the throttle opening. In this case, the target engine speed is decreased (the change gear is shifted to Top or High so as to decrease the speed change ratio) as the vehicle speed and the throttle opening increase, and the target engine speed is increased (the change gear is shifted to Low so as to increase the speed change ratio) as the vehicle speed and the throttle opening decrease, thereby achieving smooth acceleration or deceleration.

The control unit 10 calculates a target engine speed by repeating the above calculation according to the information on the vehicle speed and throttle opening which change momentarily, thereby controlling the speed change ratio of the continuously variable transmission 60.

Here, a comparison between the control map R(A) for the normal mode A in Fig. 4(a) and the control map R(B) for the assist I mode B in Fig. 4 (b) shows that, with the same vehicle speed, the engine speed is set higher in the assist I mode B than in the normal mode A. That is, the speed change ratio is set lower in the assist I mode B than in the normal mode A. The setting of the speed change ratio in the assist I mode B lower allows more powerful acceleration to be achieved in the assist I mode B than in the normal mode A.

The control of the control unit 10 of this embodiment will next be described. First, the control unit 10 can switch between the respective control maps of the drive modes shown in Figs. 4 (a) and 4 (b) by the rider operating the mode-selection operation member 30 (for example, pressing the mode selector button 30) (arrow S50).

For example, to drive on a quiet street, the rider selects the normal mode A so as to drive the vehicle gently and quietly. To increase the engine output on a mountain path or the like, the rider selects the assist I mode B so as to drive the vehicle crisply with high response.

Then, the control unit 10 can shift the change gear to a shift-down state A1 or B1 in which the speed change ratio is shifted to lower than that of the drive mode A or B by the rider operating the shift-down operation member 40 (for example, by pressing the SD button). In the example illustrated, during driving in the normal mode A of Fig. 4 (a), the control map R(A) for the normal mode A shifts to the region R(A1) lower than the initial position (arrow S51), and during driving in the assist I mode B of Fig. 4(b), the control map R (B) for the assist I mode B shifts to the region R(B1) lower than the initial position (arrow S52). The speed change ratios are thus temporarily shifted downward from those of the drive modes to enable driving using engine braking or to prevent slow acceleration during passing or climbing a hill.

The above arrangement allows acceleration in the shift-down state A1 even from the normal mode A. For example, this arrangement eliminates acceleration only after switching to the assist I mode B to pass a preceding car while driving in the normal mode A, allowing the rider to pass the target car by temporarily accelerating rapidly only by pressing a switch down or kick down KD button, providing comfortable driving.

In this embodiment, shifting from each drive mode to a shift-down state can be executed without switching between the control maps. That is, it is executed by multiplying a target speed change ratio calculated from the control map for each drive mode by a predetermined conversion factor. Specifically, a target engine speed in a shift-down state is set by multiplying an engine speed calculated from the control map of each drive mode by a predetermined conversion factor (for example, 1.35). The larger the predetermined conversion factor, the more the speed change ratio in a shift-down state is shifted to Low, thus providing higher engine output. The predetermined conversion factor is stored in a factor map format in a storage unit inside or outside the control unit.

The shift to a shift-down state from each drive mode can be executed with the control maps switched. Specifically, as a control map for specifying a shift-down state, a map in which the speed change ratio is set lower than the control map for each drive mode is stored in a storage unit in advance. After shifing to a shift-down state, a target speed change ratio is calculated using the control map for specifying a shift-down state. In this case, a return from the shift-down state to each drive mode is executed automatically when predetermined conditions are met. The automatic return from the shift-down state to each drive mode will be described later in detail.

The predetermined conversion factor for the multiplication may be different between the drive modes or the same. Multiplying by different conversion factors from one drive mode to another ensures the effects of kick-down control. For example, the control map for the assist I mode B is set lower than that for the normal mode A. Even if the control map is set to Low as described above, the conversion factor in the assist I mode B can be smaller than that in the normal mode A so as to provide sufficient shift-down effects (acceleration/deceleration effects of shift-down).

As shown in Fig. 4 (a), a plurality of shift-down states can be set in each drive mode. In this case, a plurality of shift-down states is set to positions shifted to Low from the speed change ratio of each drive mode. Fig. 4(a) shows an example in which a shift-down state A2 is set lower than the shift-down state A1 of the normal mode A. The control unit 10 can execute control to shift to the shift-down states in sequence (in the example of Fig. 4(a), the normal mode A → the shift-down state A1 → the shift-down state A2) according to the operation of the shift-down operation member 40.

A method for canceling a shift-down state according to this embodiment will be described.

As shown in Figs. 2 and 7, the control unit 10 includes a first setting section 16 for setting cancel conditions for canceling a shift-down state. The control unit 10 executes a third control function 13 of canceling the shift-down state according to the cancel conditions set by the first setting section 16 to return to or remain in a drive mode before shifting to the shift-down state. Any cancel conditions to cancel the shift-down state can be set in the first setting section 16 of the control unit 10.

In this embodiment, the cancel conditions of the first setting section 16 for canceling the shift-down state include a predetermined operation of the accelerator operation member 20. In this case, the third control function 13 is executed according to the operation of the accelerator operation member 20 set in the first setting section 16. Specifically, in this embodiment, the cancel conditions of the first setting section 16 for canceling the shift-down state include a predetermined operation of the accelerator operation member 20 to decrease the accelerator opening. The control unit 10 executes the third control function 13 according to the operation of the accelerator operation member 20 to decrease the accelerator opening. The third control function 13 is executed according to a program preset in the control unit 10.

In other words, the control unit 10 of this embodiment can execute control to issue a shift-down cancel instruction according to the state of the straddle-type vehicle 100, and cancel the shift-down state to return to each drive mode from the shift-down state (arrows S53 and S54). The state of the straddle-type vehicle 100 can be detected by a sensor 25 that is electrically connected to the control unit 10. The detected state of the straddle-type vehicle 100 is a state other than the state of the shift-down operation member 40. The sensor 25 for detecting the state of the straddle-type vehicle 100 is, for example, an accelerator position sensor (APS) 22 for detecting the state of the accelerator operation member 20. In this case, the shift-down cancel instruction can be configured to be issued according to an accelerator position signal output from the accelerator position sensor.

In this embodiment, the control unit 10 may be set so as to issue the shift-down cancel instruction according to an accelerator position signal indicative of a decrease in the accelerator opening of the accelerator operation member 20. This arrangement allows the rider, when passing a preceding vehicle, to shift the transmission to a shift-down state and to open the accelerator to accelerate, and after overtaking the target vehicle, to return the accelerator (decrease the accelerator opening), thereby automatically returning to each drive mode from the shift-down state. The return from the shift-down state is thus operatively connected to the accelerator operation member 20 which is responsive to rider' s intention. This also has the advantage of eliminating the need for switch operation and simplifying the equipment. The decrement of the accelerator opening may be set as appropriate.

As an alternative, the shift-down cancel instruction may be issued according to various information during driving. For example, if the sensor 25 for detecting the state of the straddle-type vehicle 100 is a throttle opening sensor, the shift-down cancel instruction issued according to the state of the straddle-type vehicle 100 is issued according to a throttle opening signal output from the throttle opening sensor. As another alternative, if the sensor 25 is a vehicle speed sensor for detecting the speed of the straddle-type vehicle 100, the shift-down cancel instruction issued according to the state (or the driving state) of the straddle-type vehicle 100 may be issued when the vehicle speed is a predetermined level or less.

In this case, the canceling conditions of the first setting section 16 to cancel the shift-down state may include the detection of a predetermined throttle opening signal and the detection of a vehicle speed lower than a predetermined speed at which the shift-down state is to be canceled.

As shown in Fig. 2, the straddle-type vehicle 100 may include a shift-down cancel switch (shift-down cancel SW) 41 as a shift-down cancel operation member, and the conditions to cancel the shift-down state set in the first setting section 16 may include a predetermined operation of the shift-down cancel switch 41. In this case, the third control function 13 is executed according to the operation of the shift-down cancel switch 41 set in the first setting section 16.

This structure allows a method of returning to each drive mode according to rider's intention (arrows S55 and S56) when a cancel button is pressed in conjunction with automatic return to the drive mode using various information during driving. That is, a shift-down cancel switch (for example, a shift-down cancel button) may be used as a shift-down cancel operation member 41 for issuing a shift-down cancel instruction to thereby return to each drive mode.

Not only the automatic return to the drive mode using the accelerator operation member 20 but also the return to the drive mode using the cancel button can be made. This arrangement ensures return to the each drive mode by a simple operation, facilitating reflecting rider's intention.

The shift-down cancel switch of the embodiment may double as a mode-selection operation member (for example, the mode selector SW 30). In other words, the mode selector SW 30 may be used both as a shift-down cancel switch (for example, a shift-down cancel button), thereby allowing control, while not in a shift-down state, to switch between the drive modes, and while in a shift-down state, to return to each drive mode. That is, when the straddle-type vehicle 100 is in a shift-down state, the common button can work as the shift-down cancel switch 41, and when it is not in a shift-down state, the common button can work as the mode selector switch 30.

The shared use of the shift-down cancel switch and the mode selector SW 30 allows the switching of drive modes and cancelling from a shift-down state to be made with one switch. This simplifies the structure around the switch and prevents complication of the switching operation. The structure simplifies the equipment, offering the advantage of reducing the cost for switches.

As an alternative, the shift-down cancel switch 41 may double as the shift-down operation member 40. For example, the first application of pressure to the shift-down operation member 40 may enable shifting to a shift-down state, and the second application of pressure may enable return to each drive mode. As another alternative, the difference in function between the shift-down operation member 40 and the shift-down cancel operation member 41 may be provided by the difference in the manner of pressing the button 40 (for example, press and hold or sequential press of two or more times).

Another embodiment of the invention will next be described. This embodiment is a modification of the control unit of the straddle-type vehicle according to the above-described embodiment.

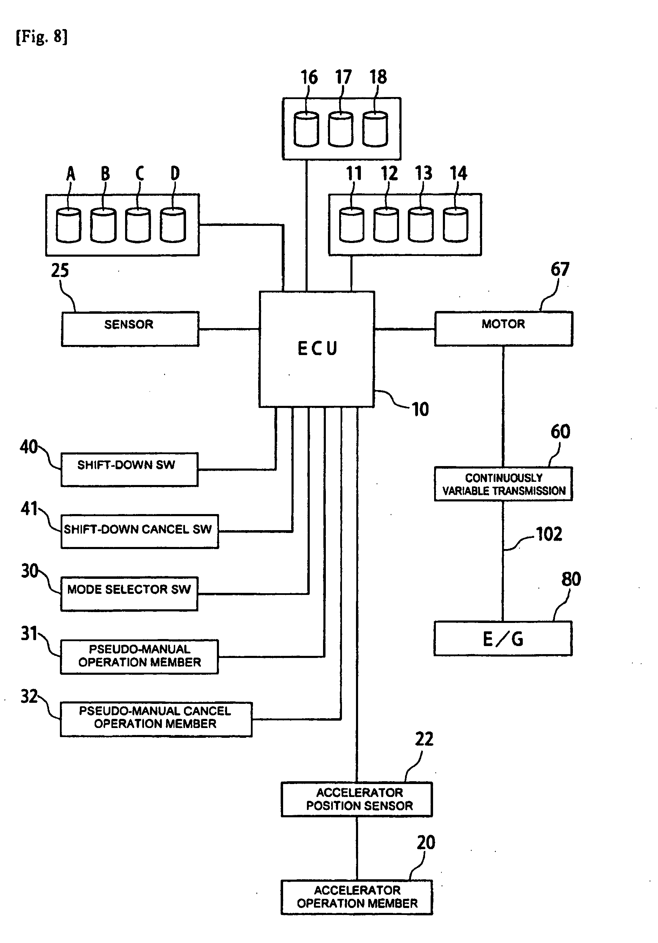

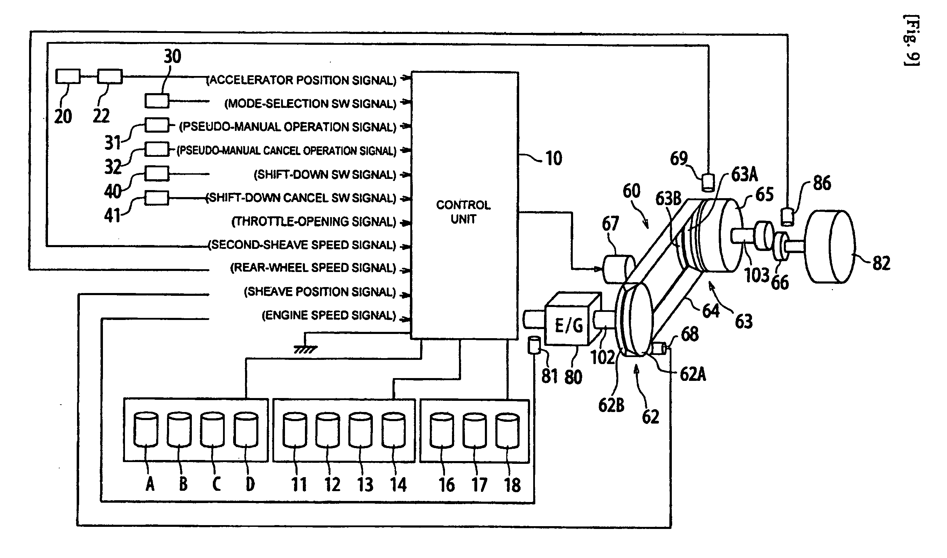

In this embodiment, as shown in Figs. 8 and 9, the control unit 10 has a plurality of drive modes A, B, and C and a pseudo-manual mode D. The control unit 10 executes a first control function 11 of switching among the drive modes A, B, and C. The control unit 10 further executes the second control function 12 of shifting the change gear to a shift-down state in all the drive modes A, B, and C. The control unit 10 includes a second setting section 17 for setting conditions for shifting to the pseudo-manual mode D. The control unit 10 executes a fourth control function 14 of shifting to the pseudo-manual mode D in at least one drive mode C of the drive modes A, B, and C according to the predetermined conditions set in the second setting section 17. In this embodiment, the control unit 10 is configured to execute the fourth control function according to the operation of the accelerator operation member 20 to increase the accelerator opening.

A straddle-type vehicle 200 according to this embodiment is different from the straddle-type vehicle 100 in that it has not only the normal mode A and the assist I mode B but also an assist II mode C.

The continuously variable transmission of the straddle-type vehicle 200 has three drive modes (the normal mode A, the assist I mode B, and the assist II mode C). The added assist II mode C principally has the same speed-change characteristics as those of the assist I mode B, and can be shifted to a pseudo-manual mode D under predetermined conditions in which the output performance of the engine or the like is given the highest priority. In other words, the difference between the assist II mode C and the assist I mode B depends on whether shifting to the pseudo-manual mode D is permitted. In this context, "pseudo-manual" means a gear change mode that provides continuous acceleration with a fixed speed change ratio as in a manual transmission (MT), but in an automatic transmission (AT).

The control unit 10 of the straddle-type vehicle 200 executes control to shift the assist II mode C to the pseudo-manual mode D, that is, to shift the speed change ratio so that the engine output comes close to the maximum according to an acceleration position signal indicative of an instantaneous increase in the accelerator opening of the accelerator operation member 20 (arrow S74). In other words, the control unit 10 can execute control to shift the transmission to the pseudo-manual mode D when the rider opens the accelerator operation member 20 rapidly.

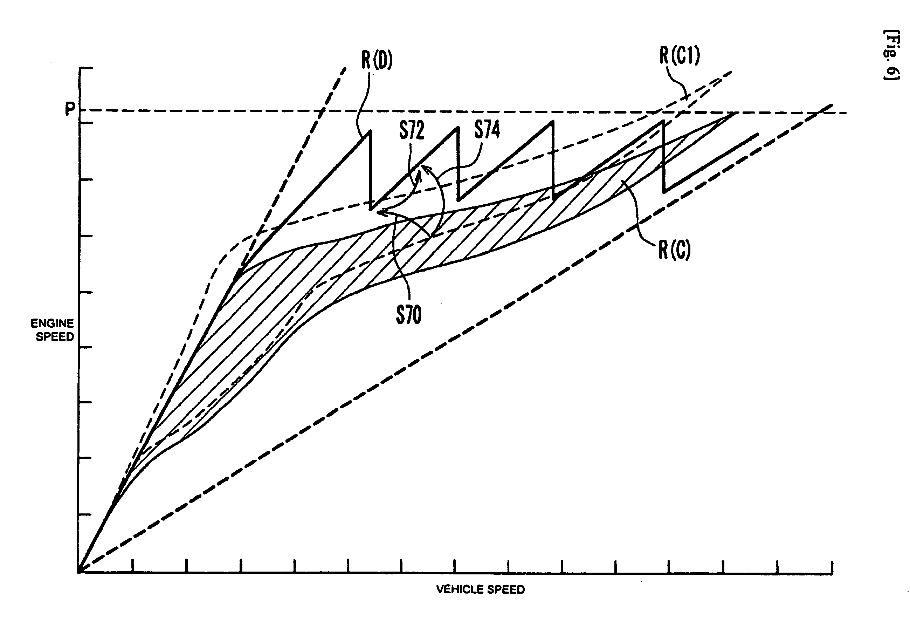

Referring also to Fig. 6, the control to shift the transmission to the pseudo-manual mode D will be described. Fig. 6 shows a control map R(C) set for the assist II mode C.

As described above, the assist II mode C principally has the same speed-change characteristics as those of the assist I mode B. That is, the control map R(C) for the assist II mode is the same as that for the assist I mode B.

When the rider opens the accelerator rapidly (for example, turns the accelerator grip rapidly) during driving in the assist II mode, the control unit 10 shifts the speed change ratio of the assist II mode C to a line R (the pseudo-manual mode D) in the neighborhood of the upper limit P of the engine speed with the fixed speed change ratio according to an accelerator position signal indicative an instantaneous increase in the accelerator opening of the accelerator operation member 20 (arrow S74). In this embodiment, the line R (the pseudo-manual mode D) is set so as to fluctuate up and down (in zigzags) because acceleration is made while the stepped fixed speed change ratios are switched with changes in the vehicle speed on the horizontal axis. The pseudo-manual mode D is a drive mode in which the speed change ratio changes stepwise with the vehicle speed. In this embodiment, it is achieved by controlling the continuously variable transmission 60 along the line R set in the control unit 10.

The upper limit P of the engine speed is set to the vicinity of the maximum engine output. Thus, the engine output can be increased in a stroke to accelerate the vehicle rapidly by increasing the engine speed to the vicinity of the upper limit P of the engine speed. In addition, since acceleration is made while the stepped fixed speed change ratios are switched with changes in the vehicle speed, as indicated by the line R(D), acceleration as in an MT can be achieved in spite of an AT, providing the rider with comfortable acceleration. Moreover, since shift to the pseudo-manual mode D can be operatively connected to the accelerator operation member 20 that may reflect rider' s intention, there is no need to operate another switch, providing the advantage of simplifying the equipment.

Instantaneous increment or decrement of accelerator opening can be determined from changes in accelerator opening. If the accelerator operation member 20 is an accelerator grip, changes in accelerator opening is, for example, the rate of turn of the accelerator grip. Instantaneous increment in accelerator opening here may be set to a desired value as appropriate.

In this embodiment, the shift to the pseudo-manual mode D is allowed also from a shift-down state C1. Specifically, the rider can shift the transmission to the pseudo-manual mode D by shifting the transmission to the shift-down state C1 by pressing the SD button (arrow S70) and then opening the accelerator rapidly (arrow S72). This arrangement allows the rider to drive, for example, as the rider approaches a curve, in such a manner as to shift the transmission to the shift-down state C1 by pressing the SD button 40, and turn the curve slowly using engine braking, and then accelerate sharply by rapidly opening the accelerator in the pseudo-manual mode D.

The shift to the pseudo-manual mode D may be executed according to rider's intention (for example, with another pseudo-manual operation member 31 or another operation member) irrespective of the state of the accelerator operation member 20.

The pseudo-manual mode D may be canceled according to conditions set in a third setting section 18 provided in the control unit 10, in which conditions for canceling the pseudo-manual mode D are preset. The conditions for canceling the pseudo-manual mode D may be the same as those for canceling a shift-down state described above. That is, the control unit 10 can cancel the pseudo-manual mode D according to the cancel conditions preset in the first setting section 16. When canceling the pseudo-manual mode D, for example, the control unit 10 may issue a pseudo-manual cancel instruction according to the state of the straddle-type vehicle 200, thereby canceling the pseudo-manual state to return to the assist II mode C (arrow S75).

Another example of the conditions for canceling the pseudo-manual mode D is a state in which the rider has closed the accelerator operation member 20. In this case, the pseudo-manual cancel instruction is issued according to an accelerator position signal indicative of a decrease in the accelerator opening of the accelerator operation member 20. The decrement of the accelerator opening may be set to a desired value as appropriate.

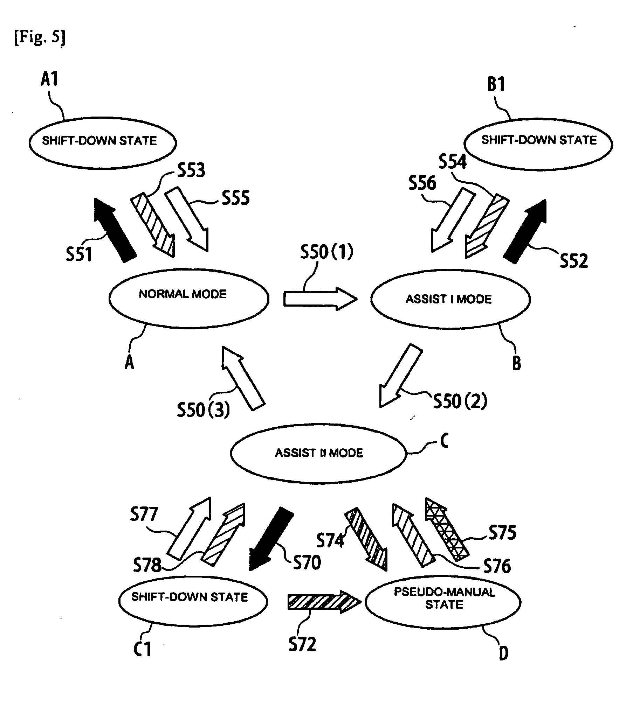

A pseudo-manual cancel operation member 32 for canceling the pseudo-manual mode D may be provided separately. In this case, the pseudo-manual mode D can be canceled when the rider presses the pseudo-manual cancel button. When the pseudo-manual mode D is canceled, the change gear may be returned to the assist II mode (C) as shown by arrow S76 in Fig. 5, for example. The conditions for canceling the pseudo-manual mode D may be a combination of automatic cancel by a predetermined operation of the accelerator operation member 20 and the manual cancel by the pseudo-manual cancel operation member 32.

Although the embodiment takes an example of shifting from the assist II mode C to the pseudo-manual mode D, the invention is not limited to that; the control unit 10 may shift the transmission from at least one of the plurality of drive modes to the pseudo-manual mode D. Thus, control to shift from the normal mode A to the pseudo-manual mode D is possible.

In this example, the three drive modes A, B, and C are set. The rider can switch among the drive modes A, B, and C in sequence by operating the mode selector SW 30 (arrow S50(1) to arrow S50(3)). The rider can also shift the transmission from the assist II mode C to the shift-down state C1 according to the operation of the shift-down operation member 40 (arrow S70), or may cancel the shift-down state C1 according to the state of the accelerator operation member 20 and/or the pressure of the shift-down cancel switch (arrows S77 and S78). That is, the rider can shift the transmission from all the three drive modes to a shift-down state.

As shown in this example, the arrangement in which the transmission can be shifted from all of the drive modes to a shift-down state allows rapid acceleration any time irrespective of a selected drive mode, further increasing rider's comfort during driving. However, in this invention, the transmission may be shifted to a shift-down state from at least two of the drive modes, and a drive mode that cannot shift to a shift-down state may be included. For example, it is also possible to arrange so as to shift from four of the five drive modes to a shift-down state.

Referring to Fig. 7, the arrangement of the embodiment of the invention, particularly, the arrangement of the continuously variable transmission 60 will be described.

As shown in Fig. 7, the straddle-type vehicle 100 of this embodiment includes the V-belt type continuously variable transmission 60 as a transmission mechanism for transmitting power from the engine 80.

The V-belt type continuously variable transmission 60 has a structure in which a primary sheave 62 is connected to a primary shaft 102 (for example, a crankshaft) rotated by the engine 80, a secondary sheave 63 is connected to a secondary shaft 103 which outputs power to a rear wheel 82 (driving wheel) via a centrifugal clutch 65 and a reduction mechanism 66, and a V-belt 64 is stretched between the primary sheave 62 and the secondary sheave 63.

The primary sheave 62 includes a fixed sheave 62A and a moving sheave 62B, and the secondary sheave 63 includes a fixed sheave 63A and a moving sheave 63B. Between the fixed sheave 62A and the moving sheave 62B and between the fixed sheave 63A and the moving sheave 63B are each formed a V-groove around which the V-belt 64 is wound. The driving force of the engine 80 is converted to rotating force for the V-belt 64 by the primary sheave 62, and the rotating force of the V-belt 64 is transferred to the rear wheel 82 via the secondary sheave 63.

The V-belt type continuously variable transmission 60 of this embodiment electrically moves the moving sheave 62B of the primary sheave 62 along the axis to adjust the width of the V-groove, so that the winding diameters of the V-belt 64 around the pulleys 62 and 63 change. Thus, the speed change ratio is controlled in a stepless manner between the pulleys 62 and 63.

The continuously variable transmission 60 includes a sheave-position moving device (mainly composed of an electric motor) 67 for controlling the position of the moving sheave 62B of the primary sheave 62 and a sheave-position detecting device (corresponding to a mechanism for detecting an actual speed change ratio) 68 for detecting the position of the moving sheave 62B. In this embodiment, the moving sheave 62B is moved by the sheave-position moving device 67 on the basis of the sheave position detected by the sheave-position detecting device 68 to change the winding diameter of the V-belt 64 wound around the primary sheave 62.

This embodiment includes, as a sensor for detecting the speed of the straddle-type vehicle 100, a secondary-sheave speed sensor 69 for detecting the rotation of the secondary sheave 63 upstream from the centrifugal clutch 65 and a speed sensor 86 located downstream from the centrifugal clutch 65 and in the vicinity of the rear wheel 82, for directly detecting the speed of the rear wheel 82. The secondary-sheave speed sensor 69 and the rear-wheel speed sensor 86 detect speed signals proportional to vehicle speed, respectively. The straddle-type vehicle 100 may have only one of the sensors.

The straddle-type vehicle 100 of this embodiment has the speed-change-ratio control unit (control unit) 10 for controlling the speed change ratio of the continuously variable transmission 60 as a central element of the control system.

The speed-change-ratio control unit 10 is mainly composed of a microcomputer, to which an acceleration position signal output from the acceleration-position sensor 22, a speed signal output from the sheave speed sensor 69 or the rear-wheel speed sensor 86, an engine speed signal output from an engine-speed sensor 81 for detecting the rotation speed of the engine 80, a throttle-opening signal output from a throttle opening sensor (not shown), a sheave-position signal output from the sheave-position detecting device 68, a main switch signal of a main switch for turning on/off the power system of the whole vehicle, and the like are input.

The control unit 10 controls the engine 80 and the whole continuously variable transmission 60 according to the above various signals. Specifically, the control unit 10 determines a target speed change ratio by calculating the vehicle speed and acceleration on the basis of the throttle-opening signal, the secondary-sheave speed, driving-wheel speed signal, the sheave-position signal and the like. The control unit 10 executes a so-called speed change control, or controlling the position of the moving sheave 62B of the primary sheave 62 by driving the sheave-position moving device 67 to so as to achieve the target speed change ratio, thereby controlling the actual speed change ratio of the straddle-type vehicle 100.

The structure of the continuously variable transmission is not limited to the foregoing embodiments and may be applied to various continuously variable transmissions having a form in which a V-belt is wound around the primary sheave and the secondary sheave and in which the groove width of the primary sheave can be adjusted by a sheave-position moving device and a control unit.

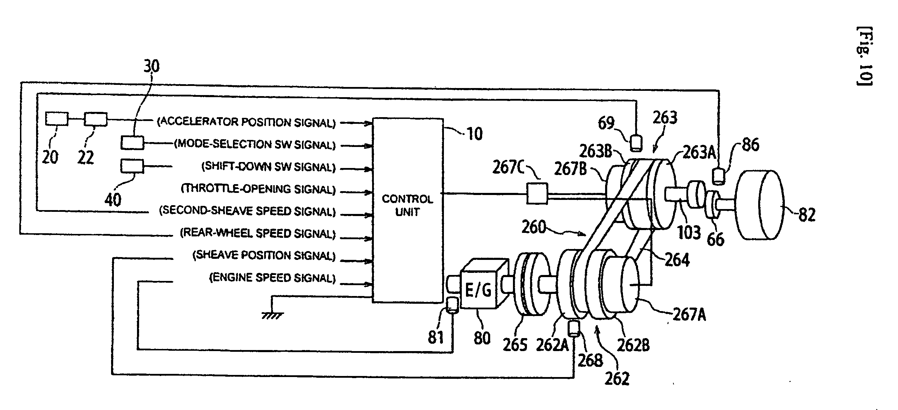

As shown in Fig. 10, a continuously variable transmission having a metal V-belt may be employed for the continuously variable transmission. The components and parts in Fig. 10 that provide the same operations as those of the embodiment of Fig. 7 are given the same reference numerals.

In this embodiment, the continuously variable transmission 260 having a metal V-belt (hereinafter, referred to as a metal-belt CVT as appropriate) is modified variously in addition to the metal V-belt 264, as shown in Fig. 10.

The metal-belt CVT 260 includes a clutch 265, a primary rotation sensor 268, hydraulic cylinders 267A and 267B, and a hydraulic control valve 267C.

The clutch 265 is disposed between the output shaft of the engine 80 and the input shaft of the metal-belt CVT 260. The clutch 265 connects and disconnects the transfer of power between the output shaft of the engine 80 and the input shaft of the metal-belt CVT 260.

The primary rotation sensor 268 detects the rotation speed of a primary sheave 262. In this embodiment, the control unit 10 calculates the speed change ratio of the continuously variable transmission 260 from the ratio of the rotation speed of the primary sheave 262 detected by the primary rotation sensor 268 to the vehicle speed of the straddle-type vehicle detected by the vehicle speed sensor (the rear-wheel speed sensor in the drawing) 86. The speed change ratio of the continuously variable transmission 260 may be calculated from the ratio of the rotation speed of the primary sheave 262 detected by the primary rotation sensor 268 to the rotation speed of a secondary sheave 263 detected by the secondary-sheave speed sensor 69.

Next, the hydraulic cylinder 267A adjusts the groove width of the primary sheave 262. In this embodiment, the hydraulic cylinder 267A applies pressure to a moving flange 262B of the primary sheave 262 to adjust the groove width of the primary sheave 262. The hydraulic cylinder 267B adjusts the groove width of the secondary sheave 263. In this embodiment, the hydraulic cylinder 267B applies pressure to a moving flange 263B of the secondary sheave 263 to adjust the groove width of the secondary sheave 263. The hydraulic control valve 267C is a valve for adjusting the oil pressure to be applied to the hydraulic cylinders 267A and 267B. When increasing the oil pressure of one of the hydraulic cylinders 267A and 267B, the hydraulic control valve 267C controls the oil pressure of the other of the hydraulic cylinders 267A and 267B to be decreased. The hydraulic control valve 267C is controlled by the control unit 10.

The speed change ratio of the metal-belt CVT 260 is changed by operating the hydraulic control valve 267C with the control unit 10. The control of the control unit 10 is similar to that of the continuously variable transmission 60. The control unit 10 of the metal-belt CVT 260 according to this embodiment uses the rotation speed of the primary sheave 262 as the target value for control in place of the engine speed.

Although the motorcycle 100 shown in Fig. 1 is a scooter-type motorcycle, the invention is not limited to that but may be applied to a motorcycle equipped with a control unit that electronically controls the gear change of a continuously variable transmission. The "motorcycle" of this specification includes a motorbike and a scooter. Specifically, it includes a vehicle that can be turned with the body tilted. It can thus include tricycles and four (or more)-wheel cars in which the number of tires of at least one of the front and rear wheels is two or more. The invention can be applied not only to motorcycles but also to other vehicles that can make use of the advantages of the invention; for example, so-called straddle-type vehicles including four-wheel buggies (all terrain vehicles (ATVs)) and snowmobiles. In the case of four-wheel buggies, the accelerator operation member may have, in addition to the shape of an accelerator grip, the shape of a lever. In addition, although an internal combustion engine is used as the driving source 80, a straddle-type vehicle that uses a motor as the driving source 80 may be provided.

According to embodiments of the invention, a straddle-type vehicle can be provided which can be accelerated rapidly by a simple operation irrespective of a selected drive mode.

### Description of Reference Numerals and Signs

10: control unit
11: first control
12: second control
13: third control
14: fourth control
16: first setting section
17: second setting section
18: third setting section
20: accelerator operation member
22: accelerator position sensor
25: sensor
30: mode-selection operation member (mode selector SW)
31: pseudo-manual operation member
32: pseudo-manual cancel operation member
40: shift-down operation member (shift-down SW)
41: shift-down cancel operation member (shift-down cancel SW)
60: continuously variable transmission
62: primary sheave
62A: fixed sheave
62B: moving sheave
63: secondary sheave
63A: fixed sheave
63B: moving sheave
64: belt
65: centrifugal clutch
66: reduction mechanism
67: sheave-position moving device (electric motor)
68: sheave-position detecting device
69: sheave speed sensor
80: engine
82: rear wheel
84: handle
86: rear-wheel speed sensor
100: straddle-type vehicle
102: primary shaft
103: secondary shaft
120: speed-change-ratio control unit
200: straddle-type vehicle
A: normal mode
B: assist I mode
C: assist II mode
D: pseudo-manual mode
A1: shift-down state (normal mode)
B1: shift-down state (assist I mode)
C1: shift-down state (assist II mode)
P: upper limit of engine speed
R(A): control map (normal mode)
R(B): control map (assist I mode)
R(C): control map (assist II mode)
R(D): control map (pseudo-manual mode)

## Claims

1. A straddle-type vehicle (100) comprising a driving source (80) whose output is controlled by an accelerator operation member (20), a continuously variable transmission (60) connected to the driving source (80), and a control unit(10) for controlling the continuously variable transmission (60), the straddle-type vehicle (100) further comprising:
a shift-down operation member (40), wherein
the control unit (10) has a plurality of drive modes (A,B,C), **characterized in that** each drive mode has a different speed change characteristic for the continuously variable transmission relative to the other drive modes; and
the control unit (10) executes:
a first control function (11) of switching among the plurality of drive modes (A,B,C); and
a second control function (12) of shifting, in at least two of the plurality of drive modes (A, B, C), to a respective shift-down state (A1,B1,C1) in which the speed change ratio of each respective shift-down state is lower than that of the associated drive mode (A,B,C), according to the operation of the shift-down operation member (40).

2. The straddle-type vehicle (100) according to Claim 1, further comprising a mode-selection operation member (30) for switching among the plurality of drive modes (A,B,C), wherein
the first control function (11) is executed according to the operation of the mode-selection operation member (30).

3. The straddle-type vehicle (100) according to Claim 1 or 2, wherein the control unit (10) comprises a first setting section (16) for setting cancel conditions for canceling the shift-down state (A1, B1, C1), and executes a third control function (13) of canceling the shift-down state (A1,B1,C1) according to the cancel conditions set by the first setting section (16) to return to the drive mode (A,B,C) before shifting to the shift-down state (A1,B1,C1).

4. The straddle-type vehicle according to Claim 3, wherein
a predetermined operation of the accelerator operation member (20) is set in the first setting section (16) as the cancel conditions for canceling the shift-down state (A1,B1,C1); and
the third control function (13) is executed according to the operation of the accelerator operation member (20) set in the first setting section (16).

5. The straddle-type vehicle (100) according to Claim 4, wherein the third control function (13) is executed according to the operation of the accelerator operation member (20) to decrease the accelerator opening.

6. The straddle-type vehicle according to Claim 3, 4 or 5, further comprising a shift-down cancel operation member (41), wherein:
a predetermined operation of the shift-down cancel operation member (41) is set in the first setting section (16) as the cancel conditions for canceling the shift-down state (A1,B1,C1); and
the third control function (13) is executed according to the operation of the shift-down cancel operation member (41) set in the first setting section (16).

7. The straddle-type vehicle (100) according to Claim 6, further comprising a mode-selection operation member (30) for switching among the plurality of drive modes (A,B,C), wherein:
the first control function (11) is executed according to the operation of the mode-selection operation member (30); and
the shift-down cancel operation member (41) and the mode-selection operation member (30) are composed of one button.

8. The straddle-type vehicle (100) according to any preceding Claim, wherein the second control function (12) can be executed in all of the drive modes (A,B,C) set in the control unit.

9. The straddle-type vehicle (100) according to any preceding Claim, wherein
the control unit (10) has a pseudo-manual mode (D) to change the speed change ratio of the continuously variable transmission (60) stepwise with the vehicle speed; and
the control unit (10) includes a second setting section (17) for setting conditions for shifting to the pseudo-manual mode (D), wherein
the control unit (10) executes a fourth control function (14) of shifting at least one of the plurality of drive modes (A,B,C) to the pseudo-manual mode (D) according to predetermined conditions set in the second setting section (17).

10. The straddle-type vehicle (100) according to Claim 9, wherein a predetermined operation to increase the accelerator opening momentarily is set in the second setting section (17) as the conditions for shifting to the pseudo-manual mode (D).

11. A continuously variable transmission (60) controlled by a control unit (10), wherein
the control unit (10) has a plurality of drive modes (A,B,C), **characterized in that** each drive mode has a different speed change characteristic for the continuously variable transmission relative to the other drive modes; and
the control unit (10) executes:
a first control function (11) of switching among the plurality of drive modes (A,B,C); and
a second control function (12) of shifting, in at least two of the plurality of drive modes (A,B,C), to a respective shift-down state (A1, B1, C1) in which the speed change ratio of each respective shift-down state is lower than that of the associated drive mode (A,B,C), according to the operation of the shift-down operation member (40).

12. The continuously variable transmission (60) according to Claim 11, wherein the first control function (11) is executed according to the operation of the mode-selection operation member (30).

13. The continuously variable transmission according to Claim 11 or 12, wherein the control unit (10) comprises a first setting section (16) for setting cancel conditions for canceling the shift-down state (A1,B1,C1), and executes a third control function (13) of canceling the shift-down state (A1,B1,C1) according to the cancel conditions set by the first setting section (16) to return to the drive mode (A,B,C) before shifting to the shift-down state (A1, B1, C1).

14. The continuously variable transmission according to Claim 13, wherein
a predetermined operation of the accelerator operation member (20) is set in the first setting section (16) as the cancel conditions for canceling the shift-down state (A1, B1, C1); and
the third control function (13) is executed according to the operation of the accelerator operation member (20) set in the first setting section (16).

15. The continuously variable transmission (60) according to Claim 14, wherein the third control function (13) is executed according to the operation of the accelerator operation member (20) to decrease the accelerator opening.

16. The continuously variable transmission according to Claim 13, 14 or 15 wherein
a predetermined operation of a shift-down cancel operation member (41) is set in the first setting section (16) as a cancel condition for canceling the shift-down state (A1,B1,C1); and
the third control function (13) is executed according to the operation of the shift-down cancel operation member (41) set in the first setting section (16).

17. The continuously variable transmission according to any of Claims 11 to 16, wherein the second control function (12) can be executed in all of the drive modes (A,B,C) set in the control unit (10).

18. The continuously variable transmission according to any of Claims 11 to 17, wherein
the control unit (10) has a pseudo-manual mode (D) to change the speed change ratio of the continuously variable transmission (60) stepwise with the vehicle speed; and
the control unit (10) includes a second setting section (17) for setting conditions for shifting to the pseudo-manual mode (D), wherein
the control unit (10) executes a fourth control function (14) of shifting at least one of the plurality of drive modes (A, B, C,) to the pseudo-manual mode (D) according to predetermined conditions set in the second setting section (17).

19. The continuously variable transmission (60) according to Claim 18, wherein a predetermined operation to increase the accelerator opening momentarily is set in the second setting section (17) as a condition for shifting to the pseudo-manual mode (D).

## Patentansprüche

1. Reitsitz-Fahrzeug (100), das Folgendes umfasst: eine Antriebsquelle (80), deren Leistungsabgabe durch ein Gas-Betätigungselement (20) geregelt wird, ein kontinuierlich veränderliches Getriebe (60), das mit der Antriebsquelle (80) verbunden ist, und eine Steuerungseinheit (10), um das kontinuierlich veränderliche Getriebe (60) zu steuern, wobei das Reitsitz-Fahrzeug (100) ferner Folgendes umfasst:
ein Herunterschalten-Betätigungselement (40), wobei
die Steuerungseinheit (10) eine Vielzahl von Fahrmodi (A, B, C) hat, **dadurch gekennzeichnet, dass** jeder Fahrmodus eine im Verhältnis zu den anderen Fahrmodi unterschiedliche Geschwindigkeitsänderungscharakteristik für das kontinuierlich veränderliche Getriebe hat, und
die Steuerungseinheit (10) Folgendes ausführt
eine erste Steuerungsfunktion (11) des Umschaltens unter der Vielzahl von Fahrmodi (A, B, C) und
eine zweite Steuerungsfunktion (12) des Umschaltens, in wenigstens zweien der Vielzahl von Fahrmodi (A, B, C), zu einem jeweiligen Herunterschalten-Zustand (A1, B1, C1), in dem das Geschwindigkeitsänderungsverhältnis jedes jeweiligen Herunterschalten-Zustandes niedriger ist als dasjenige des zugeordneten Fahrmodus (A, B, C), entsprechend der Betätigung des Herunterschalten-Betätigungselementes (40).

2. Reitsitz-Fahrzeug (100) nach Anspruch 1, das ferner ein Modusauswahl-Betätigungselement (30) für das Umschalten unter der Vielzahl von Fahrmodi (A, B, C) umfasst, wobei
die erste Steuerungsfunktion (11) entsprechend der Betätigung des Modusauswahl-Betätigungselementes (30) ausgeführt wird.

3. Reitsitz-Fahrzeug (100) nach Anspruch 1 oder 2, wobei die Steuerungseinheit (10) eine erste Einstellungssektion (16) für das Einstellen von Aufhebungsbedingungen für das Aufheben des Herunterschalten-Zustandes (A1, B1, C1) umfasst und eine dritte Steuerungsfunktion (13) des Aufhebens des Herunterschalten-Zustandes (A1, B1, C1) ausführt, entsprechend den von der ersten Einstellungssektion (16) bestimmten Aufhebungsbedingungen, um zu dem Fahrmodus (A, B, C) vor dem Herunterschalten-Zustand (A1, B1, C1) zurückzukehren.

4. Reitsitz-Fahrzeug (100) nach Anspruch 3, wobei
eine vorbestimmte Betätigung des Gas-Betätigungselementes (20) in der ersten Einstellungssektion (16) als die Aufhebungsbedingungen für das Aufheben des Herunterschalten-Zustandes (A1, B1, C1) eingestellt wird, und
die dritte Steuerungsfunktion (13) entsprechend der Betätigung des Gas-Betätigungselementes (20) ausgeführt wird, die in der ersten Einstellungssektion (16) eingestellt ist.

5. Reitsitz-Fahrzeug (100) nach Anspruch 4, wobei die dritte Steuerungsfunktion (13) entsprechend der Betätigung des Gas-Betätigungselementes (20) ausgeführt wird, um die Gasöffnung zu vermindern.

6. Reitsitz-Fahrzeug (100) nach Anspruch 3, 4 oder 5, das ferner ein Herunterschalten-Aufheben-Betätigungselement (41) umfasst, wobei:
eine vorbestimmte Betätigung des Herunterschalten-Aufheben-Betätigungselementes (41) in der ersten Einstellungssektion (16) als die Aufhebungsbedingungen für das Aufheben des Herunterschalten-Zustandes (A1, B1, C1) eingestellt wird, und
die dritte Steuerungsfunktion (13) entsprechend der Betätigung des Herunterschalten-Aufheben-Betätigungselementes (41) ausgeführt wird, die in der ersten Einstellungssektion (16) eingestellt ist.

7. Reitsitz-Fahrzeug (100) nach Anspruch 6, das ferner ein Modusauswahl-Betätigungselement (30) für das Umschalten unter der Vielzahl von Fahrmodi (A, B, C) aufweist, wobei
die erste Steuerungsfunktion (11) entsprechend der Betätigung des Modusauswahl-Betätigungselementes (30) ausgeführt wird und
das Herunterschalten-Aufheben-Betätigungselement (41) und das Modusauswahl-Betätigungselement (30) aus einem Knopf bestehen.

8. Reitsitz-Fahrzeug (100) nach einem der vorhergehenden Ansprüche, wobei die zweite Steuerungsfunktion (12) in allen der Fahrmodi (A, B, C) ausgeführt werden kann, die in der Steuerungseinheit eingestellt sind.

9. Reitsitz-Fahrzeug (100) nach einem der vorhergehenden Ansprüche, wobei
die Steuerungseinheit (10) einen pseudo-manuellen Modus (D) hat, um das Geschwindigkeitsänderungsverhältnis des kontinuierlich veränderlichen Getriebes (60) schrittweise mit der Fahrzeuggeschwindigkeit zu verändern, und
die Steuerungseinheit (10) eine zweite Einstellungssektion (17) für das Einstellen von Bedingungen für das Umschalten zu dem pseudo-manuellen Modus (D) einschließt, wobei
die Steuerungseinheit (10) eine vierte Steuerungsfunktion (14) des Umschaltens von wenigstens einem von der Vielzahl von Fahrmodi (A, B, C) zu dem pseudo-manuellen Modus (D) entsprechend den vorbestimmten Bedingungen ausführt, die in der zweiten Einstellungssektion (17) eingestellt sind.

10. Reitsitz-Fahrzeug (100) nach Anspruch 9, wobei eine vorbestimmte Betätigung, um die Gasöffnung kurzzeitig zu steigern, in der zweiten Einstellungssektion (17) als die Bedingungen für das Umschalten zu dem pseudo-manuellen Modus (D) eingestellt wird.

11. Kontinuierlich veränderliches Getriebe (60), das durch eine Steuerungseinheit (10) gesteuert wird, wobei
die Steuerungseinheit (10) eine Vielzahl von Fahrmodi (A, B, C) hat, **dadurch gekennzeichnet, dass** jeder Fahrmodus eine unterschiedliche Geschwindigkeitsänderungscharakteristik für das kontinuierlich veränderliche Getriebe im Verhältnis zu den anderen Fahrmodi hat, und
die Steuerungseinheit (10) Folgendes ausführt:
eine erste Steuerungsfunktion (11) des Umschaltens unter der Vielzahl von Fahrmodi (A., B, C) und
eine zweite Steuerungsfunktion (12) des Umschaltens, in wenigstens zweien der Vielzahl von Fahrmodi (A, B, C), zu einem jeweiligen Herunterschalten-Zustand (A1, B1, C1), in dem das Geschwindigkeitsänderungsverhältnis jedes jeweiligen Herunterschalten-Zustandes niedriger ist als dasjenige des zugeordneten Fahrmodus (A, B, C), entsprechend der Betätigung des Herunterschalten-Betätigungselementes (40).

12. Kontinuierlich veränderliches Getriebe (100) nach Anspruch 11, wobei die erste Steuerungsfunktion (11) entsprechend der Betätigung des Modusauswahl-Betätigungselementes (30) ausgerührt wird.

13. Kontinuierlich veränderliches Getriebe nach Anspruch 11 oder Anspruch 12, wobei die Steuerungseinheit (10) eine erste Einstellungssektion (16) für das Einstellen von Aufhebungsbedingungen für das Aufheben des Herunterschalten-Zustandes (A1, B1, C1) umfasst und eine dritte Steuerungsfunktion (13) des Aufhebens des Herunterschalten-Zustandes (A1, B1, C1) ausführt, entsprechend den von der ersten Einstellungssektion (16) bestimmten Aufhebungsbedingungen, um zu dem Fahrmodus (A, B, C) vor dem Herunterschalten-Zustand (A1, B1, C1) zurückzukehren.

14. Kontinuierlich veränderliches Getriebe nach Anspruch 13, wobei
eine vorbestimmte Betätigung des Gas-Betätigungselementes (20) in der ersten Einstellungssektion (16) als die Aufhebungsbedingungen für das Aufheben des Herunterschalten-Zustandes (A1, B1, C1) eingestellt wird, und
die dritte Steuerungsfunktion (13) entsprechend der Betätigung des Gas-Betätigungselementes (20) ausgeführt wird, die in der ersten Einstellungssektion (16) eingestellt ist.

15. Kontinuierlich veränderliches Getriebe (100) nach Anspruch 14, wobei die dritte Steuerungsfunktion (13) entsprechend der Betätigung des Gas-Betätigungselementes (20) ausgeführt wird, um die Gasöffnung zu vermindern.

16. Kontinuierlich veränderliches Getriebe nach Anspruch 13, 14 oder 15, wobei
eine vorbestimmte Betätigung eines Herunterschalten-Aufheben-Betätigungselementes (41) in der ersten Einstellungssektion (16) als die Aufhebungsbedingungen für das Aufheben des Herunterschalten-Zustandes (A1, B1, C1) eingestellt wird, und
die dritte Steuerungsfunktion (13) entsprechend der Betätigung des Herunterschalten-Aufheben-Betätigungselementes (41) ausgeführt wird, die in der ersten Einstellungssektion (16) eingestellt ist.

17. Kontinuierlich veränderliches Getriebe nach einem der Ansprüche 11 bis 16, wobei die zweite Steuerungsfunktion (12) in allen der Fahrmodi (A, B, C) ausgeführt werden kann, die in der Steuerungseinheit (10) eingestellt sind.

18. Kontinuierlich veränderliches Getriebe nach einem der Ansprüche 11 bis 17, wobei
die Steuerungseinheit (10) einen pseudo-manuellen Modus (D) hat, um das Geschwindigkeitsänderungsverhältnis des kontinuierlich veränderlichen Getriebes (60) schrittweise mit der Fahrzeuggeschwindigkeit zu verändern, und
die Steuerungseinheit (10) eine zweite Einstellungssektion (17) für das Einstellen von Bedingungen für das Umschalten zu dem pseudo-manuellen Modus (D) einschließt, wobei
die Steuerungseinheit (10) eine vierte Steuerungsfunktion (14) des Umschaltens von wenigstens einem von der Vielzahl von Fahrmodi (A, B, C) zu dem pseudo-manuellen Modus (D) entsprechend den vorbestimmten Bedingungen ausführt, die in der zweiten Einstellungssektion (17) eingestellt sind.

19. Kontinuierlich veränderliches Getriebe (100) nach Anspruch 18, wobei eine vorbestimmte Betätigung, um die Gasöffnung kurzzeitig zu steigern, in der zweiten Einstellungssektion (17) als die Bedingungen für das Umschalten zu dem pseudo-manuellen Modus (D) eingestellt wird.

## Revendications

1. Véhicule du type à enfourcher (100), comprenant une source d'entraînement (80) dont la sortie est contrôlée par un élément d'actionnement de l'accélérateur (20), une transmission à variation continue (60) connectée à la source d'entraînement (80), et une unité de commande (10) pour contrôler la transmission à variation continue (60), le véhicule du type à enfourcher (100) comprenant en outre :
un élément d'actionnement d'une rétrogradation (40), dans lequel
l'unité de commande (10) comporte plusieurs modes d'entraînement (A, B, C), **caractérisé en ce que** chaque mode d'entraînement présente une caractéristique de changement de vitesse différente pour la transmission à variation continue par rapport aux autres modes d'entraînement ; et
l'unité de commande (10) exécute les fonctions ci-dessous :
une première fonction de commande (11) consistant en une commutation entre les plusieurs modes d'entraînement (A, B, C) ; et
une deuxième fonction de commande (12) consistant en un passage, dans au moins deux des plusieurs modes d'entraînement (A, B, C), vers un état de rétrogradation respectif (A1, B1, C1), dans lequel le rapport de changement de vitesse de chaque état de rétrogradation respectif est inférieur à celui du mode d'entraînement associé (A, B, C), en fonction de l'actionnement de l'élément d'actionnement de la rétrogradation (40).

2. Véhicule du type à enfourcher (100) selon la revendication 1, comprenant en outre un élément d'actionnement d'une sélection du mode (30) pour assurer la commutation entre les plusieurs modes d'entraînement (A, B, C), dans lequel
la première fonction de commande (11) est exécutée en fonction de l'actionnement de l'élément d'actionnement de la sélection du mode (30).

3. Véhicule du type à enfourcher (100) selon les revendications 1 ou 2, dans lequel l'unité de commande (10) comprend une première section de réglage (16) pour régler des conditions d'annulation, pour annuler l'état de rétrogradation (A1, B1, C1), et exécute une troisième fonction de commande (13), consistant dans l'annulation de l'état de rétrogradation (A1, B1, C1), en fonction des conditions d'annulation réglées par la première section de réglage (16), en vue d'un retour vers le mode d'entraînement (A, B, C) avant de passer à l'état de rétrogradation (A1, B1, C1).

4. Véhicule du type à enfourcher selon la revendication 3, dans lequel
un actionnement prédéterminé de l'élément d'actionnement de l'accélérateur (20) et réglé dans la première section de réglage (16) comme constituant les conditions d'annulation pour annuler l'état de rétrogradation (A1, B1, C1) ; et
la troisième fonction de commande (13) est exécutée en fonction de l'actionnement de l'élément d'actionnement de l'accélérateur (20) réglé dans la première section de réglage (16).

5. Véhicule du type à enfourcher (100) selon la revendication 4, dans lequel la troisième fonction de commande (13) est exécutée en fonction de l'actionnement de l'élément d'actionnement de l'accélérateur (20), pour réduire l'ouverture de l'accélérateur.

6. Véhicule du type à enfourcher (100) selon les revendications 3, 4 ou 5, comprenant en outre un élément d'actionnement de l'annulation de la rétrogradation (41), danslequel:
un actionnement prédéterminé de l'élément d'actionnement de l'annulation de la rétrogradation (41) est réglé dans la première section de réglage (16) comme constituant les conditions d'annulation pour annuler l'état de rétrogradation (A1, B1, C1) ; et
la troisième fonction de commande (13) est exécutée en fonction de l'actionnement de l'élément d'actionnement de l'annulation de la rétrogradation (41) réglé dans la première section de commande (16).

7. Véhicule du type à enfourcher (100) selon la revendication 6, comprenant en outre un élément d'actionnement de la sélection du mode (30) pour assurer la commutation entre les plusieurs modes d'entraînement (A, B, C), dans lequel :
la première fonction de commande (11) est exécutée en fonction de l'actionnement de l'élément d'actionnement de la sélection du mode (30) ; et
l'élément d'actionnement de l'annulation de la rétrogradation (41) et l'élément d'actionnement de la sélection du mode (30) sont composés par un bouton.

8. Véhicule du type à enfourcher (100) selon l'une quelconque des revendications précédentes, dans lequel la deuxième fonction de commande (12) peut être exécutée dans tous les modes d'entraînement (A, B, C) réglés dans l'unité de commande.

9. Véhicule du type à enfourcher (100) selon l'une quelconque des revendications précédentes, dans lequel :
l'unité de commande (10) comporte un mode pseudo-manuel (D), pour changer par étapes le rapport de changement de vitesse de la transmission à variation continue (60), en fonction de la vitesse du véhicule ; et
l'unité de commande (10) englobe une deuxième section de réglage (17) pour régler les conditions de passage au mode pseudo-manuel (D), dans lequel
l'unité de commande (10) exécute une quatrième fonction de commande (14) consistant dans le passage d'au moins un des plusieurs modes d'entraînement (A, B, C) vers le mode pseudo-manuel (D), en fonction de conditions prédéterminées réglées dans la deuxième section de réglage (17).

10. Véhicule du type à enfourcher (100) selon la revendication 9, dans lequel un actionnement prédéterminé, en vue d'accroître momentanément l'ouverture de l'accélérateur, est réglé dans la deuxième section de réglage (17) comme constituant les conditions de passage au mode pseudo-manuel (D).

11. Transmission à variation continue (60), contrôlée par une unité de commande (10), dans laquelle :
l'unité de commande (10) comporte plusieurs modes d'entraînement (A, B, C), **caractérisée en ce que** chaque mode d'entraînement présente une caractéristique de changement de vitesse différente pour la transmission à variation continue par rapport aux autres modes d'entraînement ; et
l'unité de commande (10) exécute les fonctions ci-dessous :
une première fonction de commande (11) consistant en une commutation entre les plusieurs modes d'entraînement (A, B, C) ; et
une deuxième fonction de commande (12) consistant en un passage, dans au moins deux des plusieurs modes d'entraînement (A, B, C), vers un état de rétrogradation respectif (A1, B1, C1), le rapport de changement de vitesse de chaque état de rétrogradation respectif étant inférieur à celui du mode d'entraînement associé (A, B, C), en fonction de l'actionnement de l'élément d'actionnement d'une rétrogradation (40).

12. Transmission à variation continue (100) selon la revendication 11, dans laquelle la première fonction de commande (11) est exécutée en fonction de l'actionnement de l'élément d'actionnement de la sélection du mode (30).

13. Transmission à variation continue selon les revendications 11 ou 12, dans laquelle l'unité de commande (10) comprend une première section de réglage (16) pour régler des conditions d'annulation pour annuler l'état de rétrogradation (A1, B1, C1), et exécute une troisième fonction de commande (13) consistant dans l'annulation de l'état de rétrogradation (A1, B1, C1), en fonction des conditions d'annulation réglées par la première section de réglage (16), en vue d'un retour vers le mode d'entraînement (A, B, C) avant le passage à l'état de rétrogradation (A1, B1, C1).

14. Transmission à variation continue selon la revendication 13, dans laquelle :
un actionnement prédéterminé de l'élément d'actionnement de l'accélérateur (20) est réglé dans la première section de réglage (16) comme constituant les conditions d'annulation, en vue de l'annulation de l'état de rétrogradation (A1, B1, C1) ; et
la troisième fonction de commande (13) est exécutée en fonction de l'actionnement de l'élément d'actionnement de l'accélérateur (20) réglé dans la première section de réglage (16).

15. Transmission à variation continue (100) selon la revendication 14, dans laquelle la troisième fonction de commande (13) est exécutée en fonction de l'actionnement de l'élément d'actionnement de l'accélérateur (20), pour réduire l'ouverture de l'accélérateur.

16. Transmission à variation continue selon les revendications 13, 14 ou 15, dans laquelle
un actionnement prédéterminé d'un élément d'actionnement de l'annulation de la rétrogradation (41) est réglé dans la première section de réglage (16) comme constituant une condition d'annulation pour annuler l'état de rétrogradation (A1, B1, C1) ; et
la troisième fonction de commande (13) est exécutée en fonction de l'actionnement de l'élément d'actionnement de l'annulation de la rétrogradation (41) réglé dans la première section de réglage (16).

17. Transmission à variation continue selon l'une quelconque des revendications 11 à 16, dans laquelle la deuxième fonction de commande (12) peut être exécutée dans tous les modes d'entraînement (A, B, C) réglés dans l'unité de commande (10).

18. Transmission à variation continue selon l'une quelconque des revendications 11 à 17, dans laquelle:
l'unité de commande (10) comporte un mode pseudo-manuel (D), pour changer par étapes le rapport de changement de vitesse de la transmission à variation continue (60), en fonction de la vitesse du véhicule ; et
l'unité de commande (10) englobe une deuxième section de réglage (17) pour régler des conditions de passage au mode pseudo-manuel (D), dans laquelle :
l'unité de commande (10) exécute une quatrième fonction de commande (14), consistant dans le passage d'au moins un des plusieurs modes d'entraînement (A, B, C) vers le mode pseudo-manuel (D), en fonction de conditions prédéterminées réglées dans la deuxième section de réglage (17).

19. Transmission à variation continue (100) selon la revendication 18, dans laquelle un actionnement prédéterminé, destiné à accroître momentanément l'ouverture de l'accélérateur, est réglé dans la deuxième section de réglage (17) comme constituant une condition pour le passage au mode pseudo-manuel (D).
